# EUROPÄISCHE PATENTSCHRIFT

(11) **EP 2 271 513 B1**
(45) Veröffentlichungstag und Bekanntmachung des Hinweises auf die Patenterteilung: **01.11.2017**
(21) Anmeldenummer: 08749369.8
(22) Anmeldetag: 30.04.2008
(51) Int. Cl.: B60L 9/30

(54) **MEHRSYSTEMFAHRZEUGTRANSFORMATOR**
MULTI-SYSTEM VEHICLE TRANSFORMER
TRANSFORMATEUR DE VÉHICULE POLYCOURANT

(43) Veröffentlichungstag der Anmeldung: 12.01.2011
(73) Patentinhaber: Siemens Aktiengesellschaft, 80333 München (DE)
(72) Erfinder: AMON, Michael, 90556 Cadolzburg (DE)
(86) Internationale Anmeldenummer: PCT/EP2008/003650
(87) Internationale Veröffentlichungsnummer: WO 2009/132675

(56) Entgegenhaltungen:
- EP-A- 0 904 973
- EP-A- 1 315 180
- EP-A- 1 479 558
- WO-A-2006/079744
- DE-A1- 3 817 652

## Beschreibung

Die Erfindung betrifft einen Transformator für ein Mehrsystemfahrzeug mit einer Traktionsprimärwicklung einer Traktionssekundärwicklung, sowie einer Hilfssekundärwicklung.

Das gesamteuropäische Schienennetz ist durch eine Vielzahl von unterschiedlichsten Spannungsversorgungsnetzen gekennzeichnet. So existieren neben den Wechselspannungsnetzen von 25kV/50Hz oder 15kV/16,7Hz, wie beispielsweise in Deutschland, ebenfalls Gleichspannungsnetze mit einer Spannungsversorgung von 3kV oder 1,5kV. Ein Zug als Mehrsystemfahrzeug muss daher die Anforderungen im europaweiten Personen- und Güterverkehr erfüllen, dass das Mehrsystemfahrzeug in allen Spannungsnetzen, unabhängig ob Wechsel- oder Gleichspannungsbetrieb, bezüglich der unterschiedlichen Spannungshöhen betreibbar sein muss.

Eine wesentliche elektrische Komponente zur Erfüllung dieser Aufgabe stellt der im Mehrsystemfahrzeug integrierte Fahrtransformator dar. Im Wechselspannungsbetrieb wird die Wechselspannung über den Fahrdraht auf die Traktionsprimärwicklung eingespeist und dann mittels zuschaltbarer Traktionssekundärwicklungen für den Gleichstromkreis der Antriebe verwendet. Des Weiteren werden so genannte Hilfsbetriebewicklungen in Form von Heizwicklungen oder Filterwicklungen zusätzlich mit der Traktionsprimärwicklung elektromagnetisch gekoppelt, so dass für weitere Systeme, wie z.B. für die Heizung, elektrische Energie zur Verfügung steht.

Im Gleichspannungsbetrieb wird über den Fahrdraht Gleichspannung unmittelbar auf die Traktionssekundärwicklung eingeleitet, wobei die Traktionsprimärwicklung geöffnet oder kurzgeschlossen sein kann (DE 38 17 652 C2). Die Gleichspannung wird nunmehr unmittelbar über die Traktionssekundärwicklung in den Gleichstromkreis der Antriebe eingespeist.

Problematisch ist bei der Verwendung des Mehrsystemfahrzeugtransformators im Gleichspannungsbetrieb, dass insbesondere in den Traktionssekundärwicklungen systembedingte Stoßströme entstehen, die wiederum zu Stromerhöhungen in den Hilfsbetriebewicklungen oder in einer zusätzlichen Hilfssekundärwicklung führen. So beschreibt beispielsweise die WO 2006/079744 A1 einen Transformator für ein Fahrzeug mit einem Mehrstrommotor mit wenigstens einem Paar einer Primär- und Sekundärwicklung, wobei die Sekundärwicklung ferner eine Hilfssekundärwicklung umfasst. Im Gleichspannungsbetrieb wird die Traktionssekundärwicklung mit Gleichspannung versorgt. Die Traktionsprimärwicklung ist als offener Kreis konfiguriert und die Hilfssekundärwicklung ist kurzgeschlossen.

Nachteilig an diesen Lösungen im Stand der Technik ist, dass aufgrund der systembedingten Stoßströme, insbesondere in einer kurzgeschlossenen Hilfssekundärwicklung, Stromerhöhungen zu einer Beschädigung beziehungsweise sogar zu einer Zerstörung der Hilfssekundärwicklung führen können. Darüber hinaus kann die Gesamtinduktivität des Transformators aufgrund der Kurzschlüsse der Hilfssekundärwicklungen gemäß dem Stand der Technik nur im begrenzten Umfang bestimmt und damit im Rahmen der Entwicklung des Traktionstransformators nur ungenau ausgelegt werden.

Aufgabe der vorliegenden Erfindung ist es daher, einen Transformator bereitzustellen, der die oben genannten Nachteile im Stand der Technik vermeidet und eine Schädigung der Hilfssekundärwicklung aufgrund von auftretenden Stromstößen vermeidet.

Gelöst wird die Aufgabe durch einen Transformator mit den Merkmalen des Anspruchs 1. Erfindungsgemäß ist vorgesehen, dass im Gleichspannungsbetrieb die Gleichspannung in die Traktionssekundärwicklung einspeisbar ist, wobei ein elektrisches Bauteil in einem geschlossenen Schaltkreis der Hilfssekundärwicklung integriert ist.

Diese Schaltanordnung hat den Vorteil, dass bei den zum Teil hohen elektrischen Stromstößen zwischen den Anschlüssen in der Hilfssekundärwicklung die Stromhöhe beziehungsweise auch der Stromanstieg gedämpft oder verkleinert wird. Die auftretenden elektrischen Ströme in der Hilfssekundärwicklung werden daher in einer effektiven Art und Weise begrenzt. Gleichzeitig lässt sich die Gesamtimpedanz der Traktionssekundärwicklung im Gleichspannungsbetrieb gezielt steuern.

In einer vorteilhaften Ausgestaltung des Transformators ist vorgesehen, dass das elektrische Bauteil ein elektrischer Widerstand ist. In Abhängigkeit der im Gleichspannungsbetrieb auftretenden Spannungen kann bei geeigneter elektrischer Leitfähigkeit des elektrischen Widerstandes der elektrische Stromstoß effektiv begrenzt werden, da der Widerstand ein Teil der elektrischen Energie in Wärmeenergie umwandelt.

Weiterhin umfasst das elektrische Bauteil vorteilhafterweise einen Kondensator und/oder eine Spule. Durch die Verwendung eines Kondensators im geschlossenen Schaltkreis der Hilfssekundärwicklung kann - ebenfalls wie der elektrische Widerstand - die Gesamtimpedanz der Traktionssekundärwicklung auf ein optimales Niveau eingestellt werden. Andererseits bildet der Kondensator als elektrisches Bauteil in Verbindung mit der Hilfssekundärwicklung einen Schwingkreis und bietet so die Möglichkeit, bestimmte der Gleichspannung aufgeprägte Frequenzen in der Traktionssekundärwicklung zu filtern beziehungsweise zu dämpfen.

Weiterhin ergibt der Vorteil, dass im Resonanzfall bei einer entsprechenden Stromerhöhung in der Hilfssekundärwicklung die Induktivität des gesamten Transformators beeinflusst wird. Durch die zusätzliche Kapazität des Kondensators im geschlossenen Schaltkreis der Hilfssekundärwicklung wird der Strom durch die Hilfswicklung deutlich gesteigert und somit die Induktivität, zumindest der Traktionssekundärwicklung deutlich gesteigert. Hierdurch minimiert sich die Induktivität beziehungsweise verändert sich die Streuinduktivität der Traktionssekundärwicklung.

Es wird als Vorteil angesehen, dass die in der Traktionssekundärwicklung vorhandene Gesamtimpedanz durch eine Messvorrichtung ermittelt und als Steuerungseingang eines Steuerungsgerätes für ein steuerbares Bauteil benutzt wird. Hierdurch ergibt sich die Möglichkeit, in Abhängigkeit der vorhandenen Gesamtimpedanz das elektronische Bauteil im geschlossenen Schaltkreis der Hilfssekundärwicklung so zu beeinflussen, dass die Gesamtimpedanz der Traktionssekundärwicklung optimal für den jeweiligen Gleichspannungsbetrieb eingestellt ist.

Es wird als Vorteil angesehen, dass das elektrische Bauteil in der Hilfssekundärwicklung angeordnet ist. Insbesondere bei einem konzentrischen Aufbau der Traktionsprimärwicklung, der Traktionssekundärwicklung und der Hilfssekundärwicklung besteht die Möglichkeit, das elektrische Bauteil unmittelbar als Bestandteil eines geschlossenen Schaltkreises in der Hilfssekundärwicklung zu integrieren. Im Falle eines kapazitiven Bauteils kann die Einbringung von elektrisch leitenden Schichten in Verbindung mit entsprechenden zwischengelagerten Isolationsmaterialien mit hohen Dielektrizitätszahlen unmittelbar im schichtweisen Aufbau der Hilfssekundärwicklung integriert werden.

In einer vorteilhaften Ausgestaltung des Transformators ist vorgesehen, dass die Hilfssekundärwicklung entweder als zusätzliche Sekundärwicklung in den Transformator integriert oder eine vorhandene Hilfsbetriebewicklung bezüglich der elektrischen Anforderung so angepasst ist, dass diese im Gleichspannungsbetrieb als Hilfssekundärwicklung genutzt werden kann. Als Hilfssekundärwicklung im Sinne der Erfindung werden insbesondere Heizwicklungen, Filterwicklungen und/oder Ausgleichswicklungen verstanden.

Mit der automatischen Ermittlung der Gesamtimpedanz ist vorteilhafterweise eine automatische Regelung des elektrischen Bauteils, insbesondere in Form eines die elektrische Leitfähigkeit regelnden Potentiometers, gegeben.

Vorteilhafterweise können mehrere Hilfssekundärwicklungen in Abhängigkeit der anliegenden Gleichspannungen elektrisch miteinander, insbesondere in Reihe, verschaltet werden.

Weitere vorteilhafte Ausgestaltungen ergeben sich aus den Unteransprüchen.

Die Erfindung wird anhand der nachfolgenden Figuren näher erläutert. Es zeigen
- Fig. 1: Schaltbild des Transformators mit geschlossenem Schaltkreis und integriertem Widerstand;
- Fig. 2: Schaltbild des Transformators mit einem Kondensatorelement im geschlossenen Schaltkreis der Hilfssekundärwicklung;
- Fig. 3: Schaltbild des Transformators mit integriertem Schwingkreis im geschlossenen Schaltkreis der Hilfssekundärwicklung.

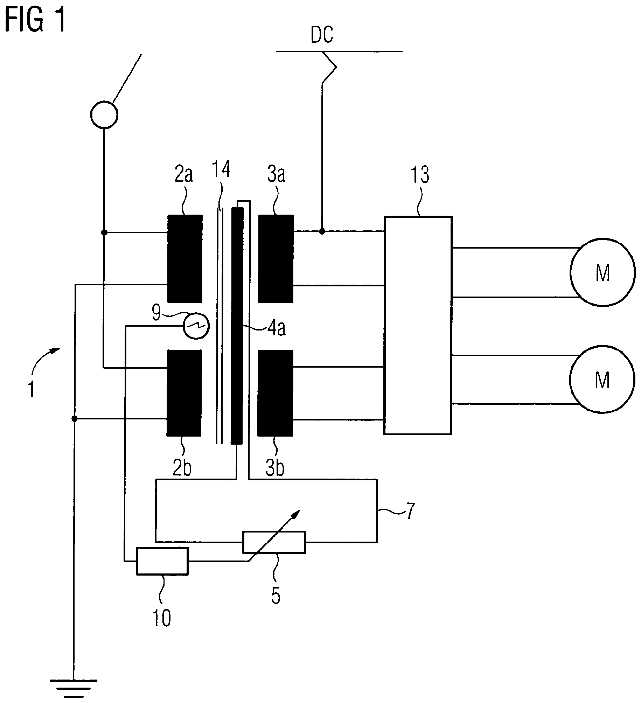

Die Fig. 1 zeigt ein Schaltbild des Transformators 1, dessen Traktionssekundärwicklungen 3a, 3b mittels eines Hoch- beziehungsweise Tiefstellers 13 zusammenschaltbar sind. An dem Hoch- beziehungsweise Tiefsteller 13 sind nachfolgend Gleichstromkreise beziehungsweise die unmittelbare Motorsteuerung angeordnet. Die Traktionsprimärwicklungen 2a, 2b sind für die Traktionssekundärwicklungen 3a, 3b und eine Hilfssekundärwicklung 4a um einen entsprechenden Kern 14 gruppiert. Die Traktionsprimärwicklungen 2a, 2b sind im Gleichspannungsbetrieb in einem offenen Kreis angeordnet und mit der elektrischen Erde verbunden. Die Hilfssekundärwicklung 4a weist einen geschlossenen Schaltkreis 7 auf, in dem ein regelbares Potentiometer 5 angeordnet ist. Die Impedanz des Traktionstransformators 1 wird mittels einer entsprechenden Messvorrichtung 9 gemessen und an eine Steuereinheit 10 übermittelt. Die Steuereinheit ist unmittelbar mit dem regelbaren Potentiometer 5 verbunden und regelt in Abhängigkeit der an der Messvorrichtung 9 gemessenen Impedanz den geschlossenen Schaltkreis 7 der Hilfssekundärwicklung nach.

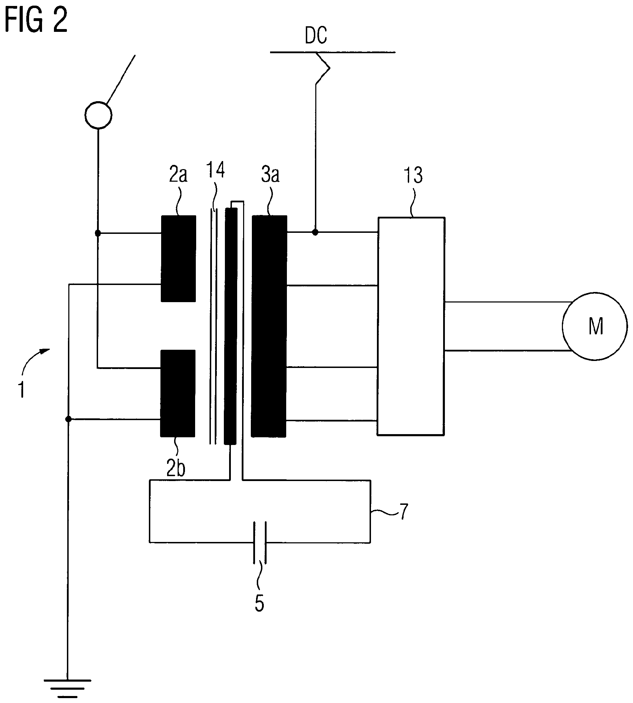

Die Fig. 2 zeigt ein Schaltbild des Transformators 1, in dessen geschlossenen Schaltkreis 7 eine Kapazität angeordnet ist. Aufgrund der hohen elektrischen Ströme in der Hilfssekundärwicklung wird die Induktivität des gesamten Transformators 1 beeinflusst, so dass die zusätzliche Kapazität 5 im geschlossenen Schaltkreis 7 der Hilfssekundärwicklung 4a den elektrischen Strom in der Hilfssekundärwicklung 4a erhöht und so die Induktivität des Transformators 1 insgesamt regelbar ist.

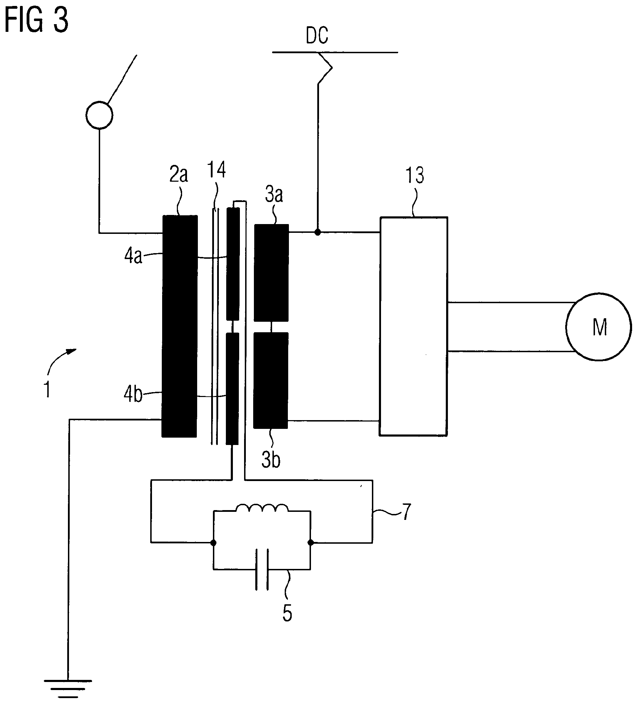

Die Fig. 3 zeigt ein Schaltbild des Transformators 1 mit einem Schwingkreis 5 im geschlossenen Schaltkreis der Hilfssekundärwicklungen 4a, 4b. Im gezeigten Beispiel der Fig. 3 sind die Hilfssekundärwicklungen 4a, 4b elektrisch miteinander verschaltet und Teil des geschlossenen Schaltkreises 7. Ebenfalls sind die Traktionssekundärwicklungen 3a, 3b in Reihe miteinander elektrisch verbunden.

## Patentansprüche

1. Transformator (1) für ein Mehrsystemfahrzeug (6) mit einer Traktionsprimärwicklung (2) und einer Traktionssekundärwicklung (3), sowie einer Hilfssekundärwicklung (4), wobei im Gleichspannungsbetrieb die Gleichspannung an der Traktionssekundärwicklung (3) anliegt, wobei ein elektrisches Bauteil (5) in einem geschlossenen Schaltkreis (7) der Hilfssekundärwicklung (4) integriert ist,
**dadurch gekennzeichnet, dass** im Gleichspannungsbetrieb die in der Hilfssekundärwicklung (4) vorhandene Gesamtimpedanz durch eine Steuerung des elektrischen Bauteils (5) veränderbar ist.

2. Transformator (1) nach Anspruch 1,
**dadurch gekennzeichnet, dass**
das elektrische Bauteil (5) ein elektrischer Widerstand ist.

3. Transformator (1) nach einem der Ansprüche 1 oder 2, **dadurch gekennzeichnet, dass**
das elektrische Bauteil (5) ein Kondensator und/oder eine Spule umfasst.

4. Transformator (1) nach einem der vorhergehenden Ansprüche 1 bis 3,
**dadurch gekennzeichnet, dass**
das elektrische Bauteil (5) in der Hilfssekundärwicklung (4) angeordnet ist.

5. Transformator (1) nach einem der Ansprüche 3 bis 4, **dadurch gekennzeichnet, dass**
das elektrische Bauteil (5) im Transformator (1) angeordnet ist und eine Abfolge von elektrisch leitenden Schichten (11) und Isolationsschichten (12) mit hohen Dielektrizitätskonstanten umfasst.

6. Transformator (1) nach einem der Ansprüche 1 bis 5, **dadurch gekennzeichnet, dass**
die Hilfssekundärwicklung (4) als zusätzliche Traktionssekundärwicklung ausgebildet ist.

7. Transformator (1) nach einem der Ansprüche 1 bis 5, **dadurch gekennzeichnet, dass**
eine vorhandene Hilfsbetriebewicklung mit angepasster Wicklungszahl als Hilfssekundärwicklung (4) nutzbar ist.

8. Transformator (1) nach einem der Ansprüche 1 bis 7, **dadurch gekennzeichnet, dass**
eine Messvorrichtung (9) die Gesamtimpedanz der Traktionssekundärwicklung (3) ermittelt und in Abhängigkeit der ermittelten Gesamtimpedanz eine Steuereinheit (10) das elektrische Bauteil (5) so regelt, dass eine optimale Induktivität der Traktionssekundärwicklung (3) trotz systembestimmter Stoßströme gewährleistet ist.

## Claims

1. Transformer (1) for a multi-system vehicle (6) having a traction primary winding (2) and having a traction secondary winding (3), as well as an auxiliary secondary winding (4), wherein, during DC voltage operation, the DC voltage is applied to the traction secondary winding (3), wherein an electrical component (5) is integrated in a closed circuit (7) of the auxiliary secondary winding (4),
**characterized in that**, during DC voltage operation, the total impedance in the auxiliary secondary winding (4) can be varied by controlling the electrical component (5).

2. Transformer (1) according to Claim 1, **characterized in that** the electrical component (5) is an electrical resistor.

3. Transformer (1) according to one of Claims 1 and 2, **characterized in that** the electrical component (5) comprises a capacitor and/or a coil.

4. Transformer (1) according to one of the preceding Claims 1 to 3, **characterized in that** the electrical component (5) is arranged in the auxiliary secondary winding (4).

5. Transformer (1) according to one of Claims 3 to 4, **characterized in that** the electrical component (5) is arranged in the transformer (1) and comprises a sequence of electrically conductive layers (11) and insulation layers (12) with high dielectric constants.

6. Transformer (1) according to one of Claims 1 to 5, **characterized in that** the auxiliary secondary winding (4) is in the form of an additional traction secondary winding.

7. Transformer (1) according to one of Claims 1 to 5, **characterized in that** an existing auxiliary operating winding with an adapted number of turns can be used as the auxiliary secondary winding (4).

8. Transformer (1) according to one of Claims 1 to 7, **characterized in that** a measurement apparatus (9) determines the total impedance of the traction secondary winding (3), and a control unit (10) controls the electrical component (5) as a function of the determined total impedance so as to ensure an optimum inductance of the traction secondary winding (3) despite system-dependent surge currents.

## Revendications

1. Transformateur (1) pour un véhicule (6) multisystème comprenant un enroulement (2) primaire de traction et un enroulement (3) secondaire de traction, ainsi qu'un enroulement (4) secondaire auxiliaire, dans lequel, en fonctionnement en tension continue, la tension continue s'applique à l'enroulement (3) secondaire de traction, un composant (5) électrique étant monté dans un circuit (7) fermé de l'enroulement (4) secondaire auxiliaire, **caractérisé en ce que**
en fonctionnement en tension continue, l'impédance totale présente dans l'enroulement (4) secondaire auxiliaire peut être modifiée par une commande du composant (5) électrique.

2. Transformateur (1) suivant la revendication 1, **caractérisé en ce que**
le composant (5) électrique est une résistance électrique.

3. Transformateur (1) suivant la revendication 1 ou 2, **caractérisé en ce que**
le composant (5) électrique comprend un condensateur et/ou une bobine.

4. Transformateur (1) suivant l'une des revendications précédentes 1 à 3,
**caractérisé en ce que**
le composant (5) électrique est monté dans l'enroulement (4) secondaire auxiliaire.

5. Transformateur (1) suivant l'une des revendications 3 à 4,
**caractérisé en ce que**
le composant (5) électrique est monté dans le transformateur (1) et comprend une succession de couches (11) conductrices de l'électricité et de couches (12) isolantes à grande constante diélectrique.

6. Transformateur (1) suivant l'une des revendications 1 à 5,
**caractérisé en ce que**
l'enroulement (4) secondaire auxiliaire est constitué en enroulement secondaire de traction supplémentaire.

7. Transformateur (1) suivant l'une des revendications 1 à 5,
**caractérisé en ce qu'**
un enroulement de service auxiliaire présent à nombre de spires adaptées peut être utilisé comme enroulement (4) secondaire auxiliaire.

8. Transformateur (1) suivant l'une des revendications 1 à 7,
**caractérisé en ce qu'**
un dispositif (9) de mesure détermine l'impédance totale de l'enroulement (3) secondaire de traction et, en fonction de l'impédance totale déterminée, une unité (10) de commande régule le composant (5) électrique, de manière à assurer une inductance optimale de l'enroulement (3) secondaire de traction, en dépit des courants de choc dus au système.
